# EUROPEAN PATENT APPLICATION

(11) **EP 0 619 249 A1**
(43) Date of publication of application: **12.10.1994**
(21) Application number: 93610024.7
(22) Date of filing: 07.04.1993
(51) Int. Cl.: B65G 47/14, B65G 47/91, B07C 5/10, B07C 5/02

(54) **A method and an apparatus for individualization and controlled discharge of discrete objects available in bulk form**

(71) Applicant: CABINPLANT INTERNATIONAL A/S, DK-5683 Haarby (DK)
(72) Inventor: Andersen, Niels Joergen, DK-5672 Broby (DK)
(74) Representative: Kjerrumgaard, Bent

(57) **Abstract**

An apparatus for the individualization and controlled discharge of discrete objects presented in bulk form comprises a supporting surface (90) adapted to support objects in bulk form, a suction device (80) adapted to engage and grip any object contacted, means for controlling said suction device so that any object engaged may be released when appropriate, and means (49,102,103) for manipulating said suction device so that it may be lowered to a position proximal to said supporting surface and elevated to an elevated position, and so that it may be displaced in a direction along said supporting surface to various positions,
said positions including a release position, from which an object engaged by said suction device may be released by appropriate control of said suction device to be collected by appropriate means for collecting and discharging individualized objects.

The invention also concerns a method for the individualization and controlled discharge of discrete objects presented in bulk form, a method for determining physical data of discrete objects, a method for the classification of discrete objects according to the physical data determined, and the use of the apparatus to individualize comestible objects, such as pieces of fish, fillets of fish or fillets of frozen fish.

## Description

The present invention concerns a method and an apparatus for the individualization and controlled discharge of discrete objects available only in bulk form. The invention further concerns a method for determining physical data of discrete objects and a method for the classification of discrete objects according to the physical data determined, and the invention concerns the use of the apparatus to individualize comestible objects, such as pieces of fish, fillets of fish or fillets of frozen fish.

Numerous products comprising individual elementary objects are recovered in bulk form and are required to be processed in an individualized form requiring a method of individualizing the elementary objects. The individualization may be necessary in order to determine physical data that must be determined for the individual objects of the products, e.g. unit weight, unit size or area, species, etc., e.g. when classification of the objects according to the physical data is required, or the individualization may be necessary in order to perform processing operations which inherently can only be performed on the individual objects.

While weighing, inspecting and processing individual objects are reasonably simple tasks which may be standardized and automated in processing lines operating at high throughput rates, the initial stage of individualizing the objects may still be more difficult to automate. In order to obtain efficient operation of downstream processing equipment, it is generally required that the objects are presented at exact time intervals and at a high rate. Various types of equipment have been developed with the purpose of automating the individualization of various kinds of objects. These types of equipment may, however, have the drawback that the handling is too rough and may damage vulnerable objects, or the equipment may have limitations regarding the variety permissible among the objects in the bulk.

In the case of processing fresh fish, apparatuses have been developed for individualization and sorting of fish presented in bulk form, which apparatuses comprise slits between rods or rolls, where the fish may pass between slits of different widths according to their thickness. An apparatus of this type may classify the incoming fish according to its thickness, whereby any later individualization method is somewhat simplified.

In case of flat fish, e.g. the species plaice (pleuronectes platessa), brail or flounder (platichthys flesus), apparatuses based on sorting the fish by passing it through slits are less reliable, or they may be unusable because the individual fish may bend or climb over the rods or rolls defining the slits. These species of fish are therefor today generally individualized manually.

Norwegian patent No. 75934 discloses an apparatus for individualizing fish designed to lift individual fish out of a waterfilled vessel by means of a suction disc, whereafter the individualized fish is dropped into a waterfilled hopper, from where it may be passed onwardly by hydraulic transportation. To engage fish, the suction disc is lowered to the water surface, oscillated back and forth mechanically in a direction parallel to the water surface and then, after a predetermined interval of time, lifted and displaced from the vessel to a position above the hopper by mechanical means.

This prior art apparatus has been found to have some drawbacks limiting its use. The chance of catching one fish out of a lot by random application of a suction disc is generally limited since the suction disc will inevitably be unable to get a proper grip of the fish in the cases where the suction disc happens to be applied over a portion of the fish edge. The horizontal oscillation of the suction disc will not be very efficient to bring the suction disc into positions where it may obtain a better grip of one fish, since it may instead merely move the suction disc along the edge of a fish, or it may push the fish away from the suction disc. Since the fish is slippery, there is even the chance that an initially good grip may get lost due to the horizontal oscillation. The system according to the Norwegian patent is apparently only designed to operate on fish immersed wholly in water. The immersion of caught fish in water is, however, in many cases unacceptable, since slime and other substances may be dissolved and washed away from the surface of the fish, causing a degradation of the appearance and the nutricious value of the caught fish in addition to constituting a substantial source of water pollution.

The present invention provides a method for the individualization and controlled discharge of discrete objects presented in bulk form, comprising
placing a bulk of objects on a supporting surface,
lowering a suction device to a position proximal to said supporting surface to contact any object present at this position,
engaging and gripping by said suction device any object encountered,
elevating said suction device again in case no object is engaged, displacing the suction device in a direction along said supporting surface and lowering it again to a new position proximal to said supporting surface in order to contact any object present at that position, and repeating this sequence, in case no object is engaged,
elevating said suction device upon the engagement of an object, whereby one individualized object is picked out of said bulk, lifting it and keeping it suspended,
displacing said elevated suction device to a position for the release of any suspended object,
releasing said object by appropriate control of said suction device, and
collecting and discharging said object.

This method is very effective in picking out individual fish from a bulk of fish and to discharge the individualized fish to equipment for further processing at high rates of operation. The method according to the invention handles the caught fish very gently and may be employed under moist or semidry conditions so that water pollution is minimized. The method is suitable in handling of flat fish.

The invention further provides a method for determining physical data of discrete objects presented in bulk form, comprising the above-mentioned method for the individualization and controlled discharge and the additional step of collecting the objects discharged and conveying the objects individually to means for determining the physical data of the objects. This method is very effective and handles the objects picked up very gently.

The invention further provides a method for the classification of discrete objects according to physical data, which objects are received in bulk form, comprising the above-mentioned method for determining physical data and the additional step of conveying the objects to a line of receptacles, each object being conveyed to a receptacle selected according to the particular physical data determined for the particular object. By this method, the classification of discrete objects according to their physical data may be automated to operate at high speeds, yet with a very gentle handling of the individual objects.

The invention further provides an apparatus for the individualization and controlled discharge of discrete objects presented in bulk form, comprising
a supporting surface adapted to support objects in bulk form,
means for collecting and discharging individualized objects,
a suction device adapted to engage and grip any object contacted,
means for controlling said suction device so that any object engaged may be released when appropriate,
means for manipulating said suction device so that it may be lowered to a position proximal to said supporting surface and elevated to an elevated position, and so that it may be displaced in a direction along said supporting surface to various positions in relation to said supporting surface and in relation to said means for collecting and discharging individualized objects,
said positions including a release position, from which an object engaged by said suction device may be released by appropriate control of said suction device to be collected by said means for collecting and discharging individualized objects,
said means for manipulating said suction device being adapted so that said suction device, in case it is lowered to a position proximal to said supporting surface without engaging any object, is elevated again, displaced and lowered again at a different position also proximal to said supporting surface, and so that said suction device upon engaging an object is elevated, maintained in its elevated position and moved to the release position, where the object may be released to be collected and discharged by said means for collecting and discharging individualized objects.

This apparatus operates very efficiently, provides high output rates and handles the objects very gently so that the apparatus may be used for very vulnerable objects, such as caught, fresh fish, fillets of fish or fillets of frozen fish.

According to a preferred embodiment of the invention, the suction discs are moved by rotation about a vertical axis, the discharge conveyor is arranged tangentially to the path of rotation described by the suction discs, and the speed of the dicharge conveyor is matched to that of the suction discs in order that objects may be passed from each one of the suction discs to the discharge conveyor with a minimal change of velocity. Hereby wear of the surfaces of the objects against the discharge conveyor is minimized.

According to a preferred embodiment of the invention, the rotating table is sprayed with water. The spraying is advantageous when handling objects such as fresh fish in order to keep the surfaces of these objects moist so as to protect them against drying out and prevent them from sticking to the table top surface. The spraying should be controlled so as to be just sufficient to keep the fish moist at a minimum amount of water in order to avoid flushing away or dissolving substances from the surface of the fish.

The invention further provides a device for engaging and lifting an object, comprising
a suction device,
a bellows adapted to lift said suction device, when vacuum is applied, and
an air conduit connecting said bellows to said suction device in order that any vacuum developed within said suction device upon the engagement of an object will be communicated to said bellows.

This device may operate automatically to lift an object exactly at the instant when the suction disc attains a good grip of the object and is therefore suitable for use in connection with handling equipment adapted to operate at high throughput rates.

The invention further provides the use of the apparatus for the purpose of individualizing comestible objects, such as pieces of fish, fillets of fish or fillets of frozen fish.

The invention will be more fully understood from the following description of examples of preferred embodiments, which are given under reference to the drawings, wherein
- Figure 1: is a general view of a plant according to the invention for the classification of fish,
- Figure 2: is a planar view of the roundtable according to the invention,
- Figure 3: is a top plan view of the top structure above the roundtable shown in Figure 2,
- Figure 4: is a top plan view of the rotor wheel,
- Figure 5: is a vertical section of a detail of the roundtable,
- Figure 6: is a vertical section of a lifting arm,
- Figure 7: is a vertical view of the peripheral portion of the roundtable in unfolded state, and
- Figure 8: is a block diagramme of the control system.

All drawings are schematic and not to scale and illustrate only the features necessary for the understanding of the invention, other features being omitted from the drawings. Throughout the drawings, identical features are referenced by the same reference numerals.

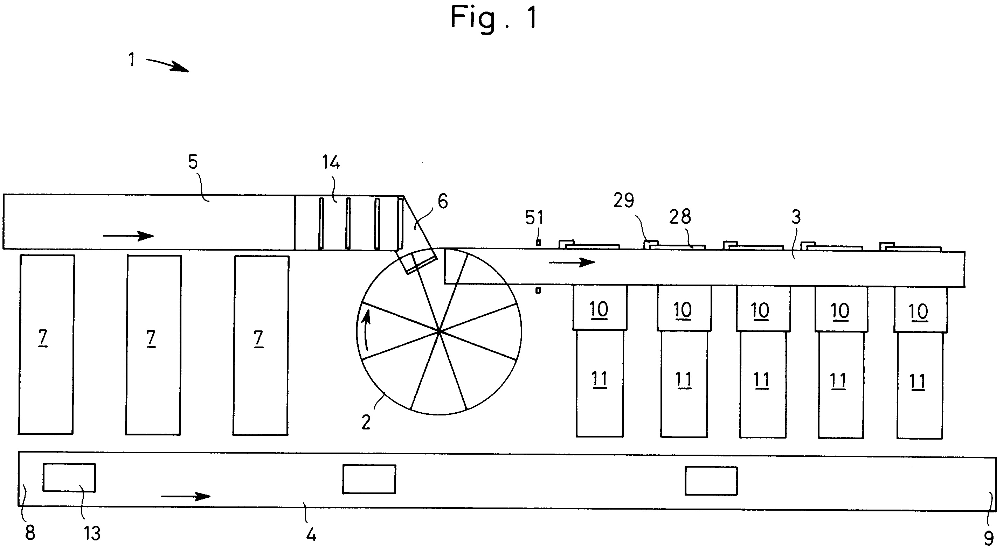

Reference is first made to Figure 1, where the general layout of a plant for the classification of fish according to the invention is illustrated in a simplified view. The plant, designated as a whole with reference numeral 1, comprises a box conveyor 4 illustrated in the lower portion of Figure 1 and adapted to move boxes or trays generally from the input end 8 to the left and towards the output end 9 to the right as shown in Figure 1.

The plant comprises three reception tables 7 illustrated in the left-hand portion of Figure 1 and arranged so that boxes loaded with fish may be transferred from the box conveyor 4 to be placed on the reception tables 7.

The content of the boxes 13 received is inspected at the reception table 7 and is then if accepted placed on the charge conveyor 5, shown in the top portion of Figure 1, which charge conveyor is adapted to transport fish in bulk form from the left towards the right, as shown in Figure 1.

The emptied boxes are brought back to the box conveyor 4 serving to convey the emptied boxes towards the right-hand portion of the plant as illustrated in Figure 1.

The plant further comprises a roundtable 2, shown at the central portion of Figure 1. Fish in bulk form is charged onto the roundtable 2 by means of the charge conveyor 5, an inclined charge elevator 14 and a charge chute 6. From the roundtable 2, individual fish are picked up in a manner to be explained in greater detail later and placed upon the discharge conveyor 3 carrying the individualized fish towards the right in Figure 1. The individualized fish are transported by the discharge conveyor 3, which leads the fish through an inspection zone 27 between frame posts 51, at which zone they are inspected optically as they pass by, and transported onwards to a section, where a number of ejector arms 28 are arranged sequentially along the left-hand side of the discharge conveyor 3 in relation to the direction of transportation. Each ejector arm 28 is arranged opposite a respective receptacle 10 for classified items arranged at the opposite side of the discharge conveyor 3. The ejector arms 28 may be operated individually to sweep across the upper side of the conveyor, whereby any object present there will be pushed away from the discharge conveyor to drop into the respective receptacle 10, whereafter the ejector arm 28 reverts to its rest position at the side of the discharge conveyor.

In the preferred embodiment, the optical inspection comprises the establishment of the planar outline of the individual fish so that length, width or area may be computed.

In another preferred embodiment (not shown), means are arranged at the inspection zone 27 for measuring the thickness of the individualized fish.

In another preferred embodiment (not shown), means are arranged at the inspection zone 27 for establishing the weight of the individualized fish.

In Figure 1 a total of five different receptacles 10 for classified items are shown, implying that the plant is laid out for sorting objects into five different classes or categories. Obviously, the system may be modified to incorporate greater or smaller numbers of different receptacles for classified items, whereby the system may be adapted for classification in greater or smaller numbers of classes.

Each receptacle 10 is associated with a packing table 11. The packing tables 11 are arranged so that empty boxes or trays may conveniently be picked from the box conveyor 4 and placed on the packing table 11, where they may be stocked with classified objects and repositioned onto the box conveyor 4, by which the loaded boxes are then transported towards the output end 9 of the box conveyor illustrated at the right-hand side of Figure 1, from where the boxes are available for dispatch.

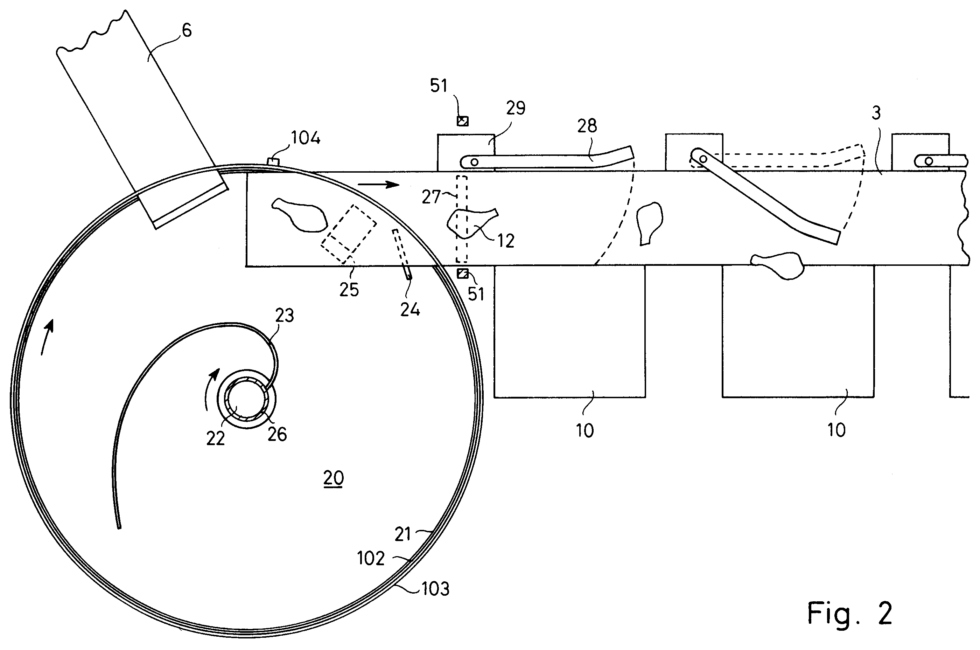

Reference is now made to Figure 2, showing a planar view of a part of the roundtable 2 in greater detail. Figure 2 shows an essentially circular disc 20, a vertical shaft 22 at the center of the disc and an approximately cylindrical, peripheral wall 21 surrounding the disc. The top edge of the peripheral wall 21 is denoted by the reference numeral 102. In the upper left-hand portion of Figure 2, part of the charge chute 6 is shown, and extending towards the right from a region of the disc near the charge chute 6, the discharge conveyor 3. The charge chute 6 as well as the discharge conveyor 3 extend above the peripheral wall 21. The peripheral wall 21 is closely surrounded by a curved rail 103 following a closed circular path, as shown in Figure 2. Figure 2 illustrates how the guide rail passes above the charge chute 6 and the discharge conveyor 3.

The peripheral wall 21 and the curved rail 103 are stationary, whereas the disc is rotatable about a vertical axis through its centre. The shaft is rotatable in relation to the disc about the vertical axis through the centre of the disc.

The shaft 22 supports a curved or spiral-formed scraper 23 extending closely along the top surface of the disc 20 from the shaft and outwardly approximately along a logarithmic spiral to a point at a short distance from the outer periphery of the disc 20. The scraper 23 is designed so that it may, by turning the shaft in the direction of the arrow in relation to the disc 20, drive fish outwardly from the central portion of the table towards the periphery. The disc 20 is adapted so as to turn in the same direction of rotation as the shaft 22, but at a velocity of rotation which is lower than that of the shaft with the scraper 23.

In the portion partly below the discharge conveyor 3, a stationary deflector blade 24 extends closely along the top surface of the disc 20 from the peripheral wall 21 and obliquely inwardly over the disc 20. The deflector blade is adapted so as to drive fish on the disc inwardly and away from the peripheral wall as the disc turns. In the portion below the' discharge conveyor 3, the roundtable is also fitted with a level detector 25 (shown in phantom). The level detector will be explained in greater detail later.

The space above the disc 20 and contained by the peripheral wall 21 is loaded with fish in bulk form by means of the charge chute 6, and from this space, discrete fish are picked up individually in a manner to be explained in greater detail later and positioned on the discharge conveyor 3 at regular intervals and carried towards the right in Figure 2. The fish pass an inspection zone 27 between the frame posts 51, where each fish is inspected. After the inspection zone, the fish are carried by the discharge conveyor 3 running past a number of receptacles 10, as explained above with reference to Figure 1. The receptacles are arranged at the right-hand side of the conveyor, as seen in the direction of transportation, and each receptacle 10 is associated with an ejector arm 28 arranged at the opposite side of the conveyor.

The ejector arm 28 is controlled by an actuator mechanism 29 and adapted so that it may turn about a vertical axis between a position with the arm extending along the side of the conveyor and into a position with the arm extending obliquely across or at least partially across the top side of the conveyor. The actuator mechanism 29 moves the ejector arm 28 swiftly so that any fish located on the conveyor within the zone covered by the ejector arm 28 will practically be kicked away or thrown away from the conveyor to drop into the corresponding receptacle 10. The operation of the actuator mechanism 29 is precisely timed according to the movement of the fish, so that the arm will strike precisely at the instant when the fish is in the corresponding position. The various actuator mechanisms 29 are operated selectively by a central control system so that any fish may be directed to any of the receptacles as decided by the central control system.

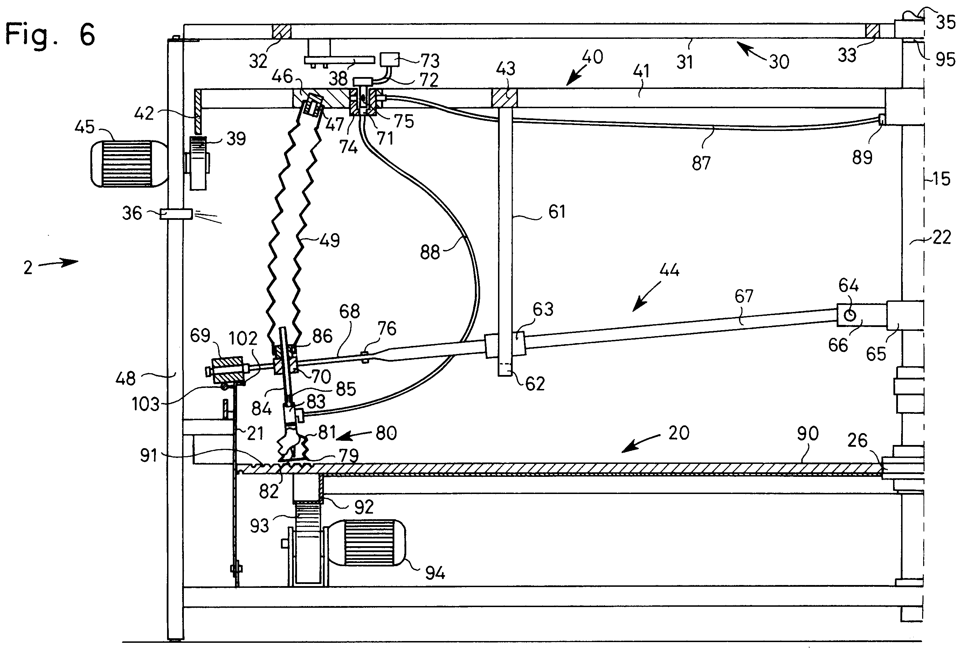

Before entering into the detailed description of various other components associated with the roundtable 2, reference is briefly made to Figure 6 for a brief explanation of some of the major components associated with the roundtable 2. Figure 6 shows a vertical section through the roundtable 2, the Figure showing a portion extending from the shaft 22 towards the right to include the peripheral portion shown to the left in Figure 6. Figure 6 illustrates the disc 20, the peripheral wall 21 arranged with a small spacing from the outer edge of the disc 20, the shaft 22, a lever arm 44 extending generally outwardly from the shaft 22, a spoke 41 extending also generally from the shaft 22 at a level above the lever arm, and a radial strut 31 above the spoke 41, which strut is part of the stationary top structure. The disc 20 is rotatable about the vertical axis 15. A structure comprising the shaft 22, the lever arm 44 and the spoke 41 is rotatable about the same axis 15 but independently of the disc 20. The peripheral wall 21 and the strut 31 are part of a stationary structure.

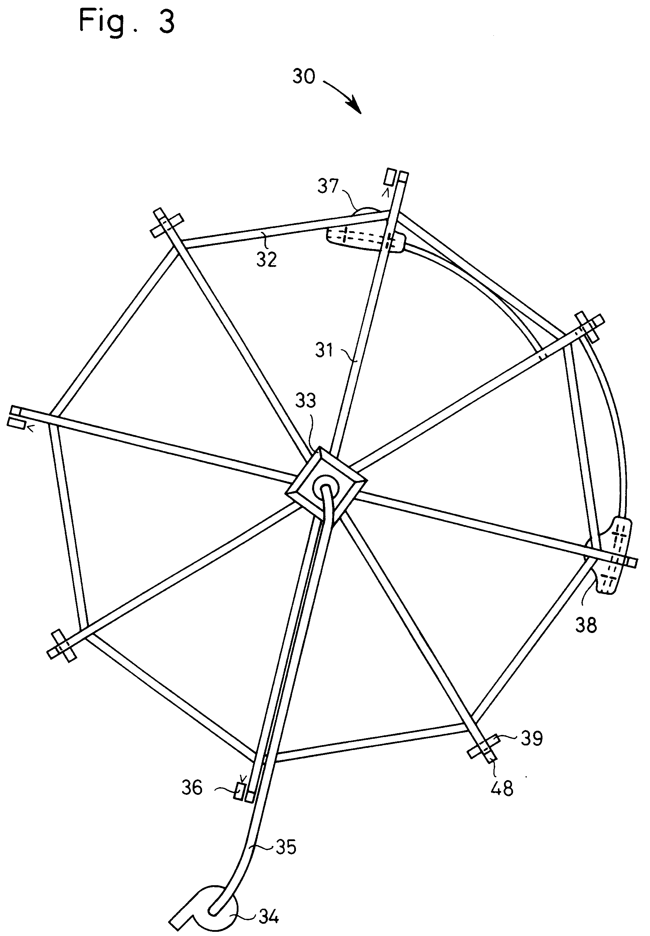

Reference is now made to Figure 3, showing the top structure 30 of the roundtable 3, components arranged below the top structure being generally omitted from Figure 3 in order to simplify the drawing and facilitate the understanding of the structure. Figure 3 shows the top structure 30 comprising essentially a system of radial struts 31 extending radially outwardly from a center structure 33, the outer ends being rigidly connected with outer posts 48, mutually adjacent radial struts 31 being interconnected with linearly extending braces 32 so that a rigid structure is formed. This structure is stationary and unrotatable, the center structure 33 comprising a bearing supporting the rotatable shaft 22 (shown in Figure 6).

Figure 3 also shows an air pump 34 connected to a main suction pipe 35 extending from the air pump 34 to the center structure 33. The air pump 34 serves to evacuate air through the main suction pipe 35 so that a vacuum may be developed and maintained.

Figure 3 also shows a first cam 37 directed outwardly and a second cam 38 directed inwardly, both cams being stationary and mounted in the top structure. The cams serve to operate a set of moving air valves, one valve 71 being associated with each of the lever arms 44 (this system will be explained later).

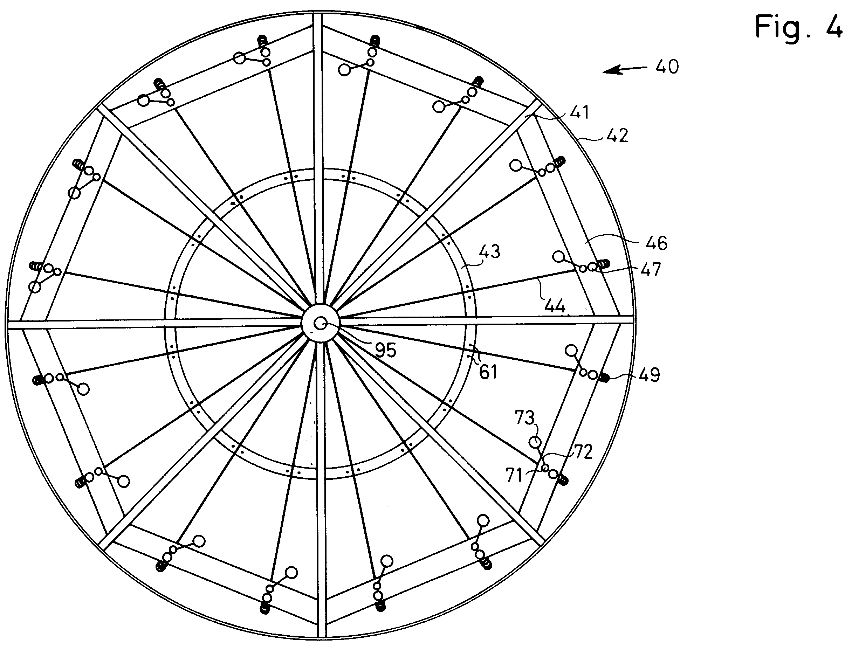

Reference is now made to figure 4, showing generally a planar view of the rotatable structure arranged above the disc 20 of the roundtable 2 and below the stationary top structure explained with reference to Figure 3. Figure 4 shows a spoke wheel 40 comprising a set of spokes 41 extending radially from the shaft 22 (cf. figures 2 and 6) to a circular rim 42. The spokes 41 are interconnected approximately at their midpoints by an approximately circularly extending annular beam 43. Close to the rim 42, the spokes 41 are interconnected by linearly extending girder beams 46. Figure 4 also shows the lever arms 44 connected rigidly to and extending radially from the shaft 22 (cf. figures 2 and 6) below the joint 95 (to be explained later) to a position adjacent the girder beams 46. Figure 4 further shows the top ends of the holding fixtures 47 mounted in the girder beams 46, each holding fixture 47 being linked to one lever arm 44 in a manner to be explained in greater detail below.

Each of the holding fixtures 47 is associated with an air valve 71 spaced radially inwardly from the holding fixture 47. Figure 4 illustrates how each air valve 71 is fitted with a valve lever 72 fitted with a circular cam follower 73 at the outer end. The air valve 71 is operated by shifting the valve lever 72 about an axis perpendicular to the plane of Figure 4. Figure 4 shows a spoke wheel with a total of eight spokes and sixteen lever arms evenly distributed around the circle. Some of the valve levers 72 may be seen in Figure 4 turned outwardly, while the rest of the valve levers 72 are turned inwardly.

Each of the lever arms 44 extends between a pair of guide rails 61 oriented perpendicularly to the plane of the drawing in figure 4, the guide rails being mounted on the annular beams 43. The guide rails 61 serve the purpose of maintaining the angular orientation of the associated lever arms 44.

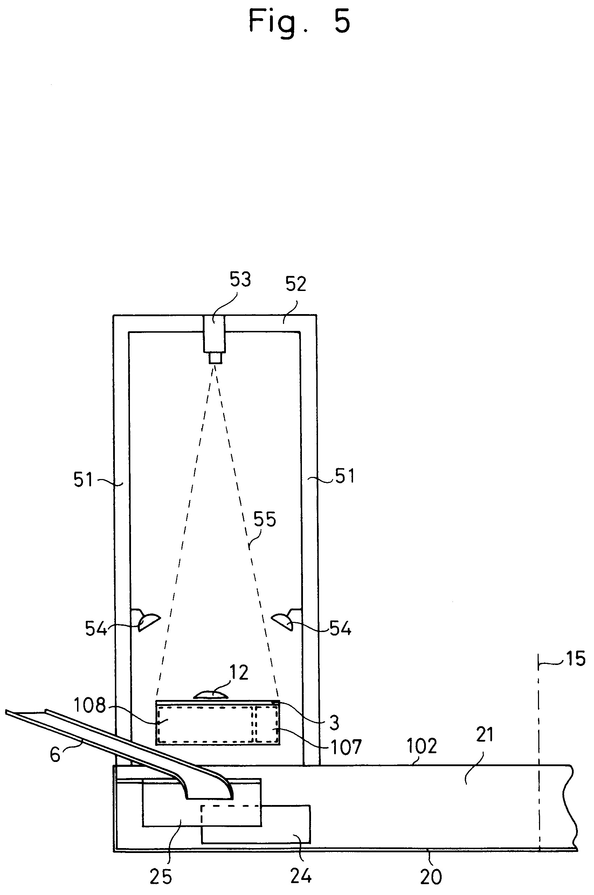

Reference is now made to Figure 5, showing a vertical, sectional view of a portion of the roundtable 2 at the discharge conveyor 3, the view being oriented so that the transport direction for the discharge conveyor 3 is perpendicular to the plane of Figure 5. Figure 5 illustrates how the discharge conveyor passes between a pair of frame posts 51 bridged at the top by a frame girder 52. The frame posts 51 carry spotlights 54 oriented to illuminate the objects on the discharge conveyor 3 as these objects pass between the frame posts 51. The crosswise oriented frame girder 52 serves as a base for video camera 53 oriented to view the illuminated objects as they pass between the frame posts, as indicated by the broken lines 55 signifying the demarcation lines of the field of vision for the video camera 53.

Figure 5 also shows the charge chute 6 arranged in front of and slightly below the discharge conveyor 3. Underneath the discharge conveyor the level detector 25 is shown. The level detector comprises a resilient blade mounted on a shaft extending from the peripheral wall 21 and some distance inwardly. The level detector 25 is constructed in a manner that the blade may turn about the shaft when struck by objects piling up on the disc 20 of the roundtable 2, and the level detector also comprises means (not shown in Figure 5) to detect the angular motion of the blade, whereby the level of the charge on the disc 20 may be monitored.

Reference is now again made to Figure 6, showing a vertical section through a portion of the roundtable extending radially from the shaft 22 and to the peripheral wall on one side. Figure 6 shows the stationary portion of the roundtable comprising the peripheral wall 21, shown at the left-hand side of Figure 6, the vertically extending outer post 48, the radial strut 30 and the brace 32 (in section). The roundtable 2 also comprises the disc 20 adapted to rotate about the axis 15. The disc 20 essentially comprises a top plate and a rigid lower structure. The top plate 90 is made of a suitable low-friction material, such as polyethylene. The top plate 90 is provided at least in a portion near the peripheral wall with surface flutings or grooves 91 for a reason to be explained in greater detail later. The top plate 90 is attached to a rigid lower structure comprising a circular profile 92 extending around the entire periphery of the top plate 90, the circular profile 92 being adapted to roll on stationary table-support rollers 93. The table may be fitted with a number of, e.g. four, table-support rollers 93, all mounted with their axes extending radially to the axis 15, at least one of the table-support rollers 93 being connected with a table drive motor 94, which is adapted to drive the top plate 90 to rotation about the axis 15.

The roundtable top plate 90 is guided in its rotation by a bearing 26 mounted on the shaft 22, enabling the top plate 90 to rotate freely in relation to the shaft 22.

Figure 6 further shows a lever arm 44 arranged at some distance above the roundtable top plate 90, the lever arm generally extending from the shaft 22 to the right, as shown in Figure 6, and towards the peripheral wall 21 to the left, as shown in Figure 6. The lever arm 44 is supported by a lever arm hub 65 rigidly mounted on the shaft 22 so as to rotate together with the shaft. From the lever arm hub, a lever arm attachment 66 extends radially outwardly, the outer portion being provided with a pivot 64 for the attachment of the lever arm rod 67 in a manner that the lever arm rod 67 is free to oscillate up and down about the horizontal axis of the pivot 64. The lever arm rod 67 extends towards the left and is connected at its leftmost end by means of the junction 76 to a lever arm extension 68. The lever arm extension 68 is provided near its outermost end with a lever arm roller 69, the roller being adapted to roll about the longitudinal axis of the lever arm.

The function of the roller 69 is to support the outer end of the lever arm opposite the lever arm hub 65 by rolling on a roller track 101 constituted by a combination of the upper, inwardly bent portion 102 of the peripheral wall 21 and the curved rail 103. Since the roller 69 extends radially over the bent portion 102 of the peripheral wall as well as over the curved rail 103, the roller will generally be supported on whichever is higher. In a preferred embodiment, the upper, inwardly bent edge 102 of the peripheral wall 21 extends uninterruptedly over the entire circumference of the roundtable at a constant height, whereas the curved rail 103 undulates up and down over those portions of the peripheral wall where it is desired to lift the lever arm upwardly, away from the upper edge 102 of the peripheral wall 21. Over those portions of the peripheral wall where there is no need to lift the lever arm, the curved rail may run below the level of the bent edge 102, and/or the curved rail may be interrupted.

Figure 6 further shows a spoke 41 of the spoke wheel 40 mentioned above, the spoke extending generally radially, parallel to the roundtable top plate 90 at a level above the lever arms, from the shaft 22 and to the rim 42. As mentioned above with reference to Figure 4, the spoke 41 is rigidly attached to the shaft 22 so as to rotate together with the shaft. Figure 6 also shows a roller 39 attached to the outer post 48 with an axis of rotation extending horizontally and radially in relation to the roundtable axis 15, this roller 39 being adapted to support the edge of the spoke wheel rim 42 so as to support and control the rotation of the spoke wheel. The roller for the spoke wheel is also provided with a drive motor 45 so as to provide the power and the control necessary for rotating the spoke wheel.

As explained above with reference to Figure 4, the spokes are interconnected with an annular beam 43 supporting pairs of downwardly extending guide rails 61 for the lever arm. In that region of the lever arm which may contact the guide rails 61, the lever arm rod is provided with a sleeve 63 of a low-friction material in order that the pair of guide rails 61 may fullfill the function of maintaining radial alignment of the lever arm, while permitting oscillation upwardly and downwardly without any noteworthy friction. The pair of guide rails 61 associated with each lever arm may also be interconnected at their lowermost ends with a connecting piece 62 so as to provide a downward limit for the oscillation of the lever arm rod 67.

In the uppermost portion, Figure 6 further shows a brace 32 of the top structure (in section), and the center structure 33 (also in section) with a bearing for the shaft 22. Figure 6 shows the second, inwardly directed cam 38 (mentioned above with reference to Figure 3) and the air valve 71 mounted on the spoke 41 (mentioned above with reference to Figure 4). The air valve 71 comprises a valve housing 74 rigidly mounted in the spoke 44 and a valve member 75 adapted to be rotatable about an axis extending parallel to the axis 15, the valve member 75 being operated by the valve lever 72 provided with the cam follower 73. The cam follower is made of low-friction material.

Figure 6 shows a part of the main suction pipe 35 where it enters the center structure 33 of the roundtable to be connected to the shaft 22 by the rotatable airtight joint 95, which may be combined with the above-mentioned bearing for the shaft 22. The shaft 22 is hollow and provides a connection to a vacuum manifold or distributor 89 fitted adjacent the joint between the spoke 41 and the shaft 22. The manifold 89 provides one air hose connection for each of the lever arms 44. From the manifold 89, one suction hose 87 for each of the respective lever arms extends along the spoke 41 and to one of the connections of the air valve 71. From another air hose connection of the air valve 71, a flexible suction hose 88 extends arcuately downwardly to a suction device 80 attached to the lever arm extension 68. The air valve 71 also has a venting opening to the ambient air and is adapted to provide, in the position as shown in Figure 6, communication of air between the suction hose and the flexible suction hose, while the valve in the opposite position where the valve lever 72 is directed outwardly (as explained with reference to Figure 4) provides venting of the flexible suction hose 88 and a blocking of the connection to the suction hose 87.

The suction device 80 generally comprises a suction disc 81, a suction disc fitting 83 and a holding pipe 84. The suction device is attached to the lever arm extension 68 by means of a crosspiece 70, which supports the holding pipe 84. The crosspiece 70 is provided with releasable clamping means permitting relative adjustments of the holding pipe 84 as well as of the lever arm extension 68 in relation to the crosspiece 70.

Near its uppermost end, the holding pipe 84 is provided with a bellows fitting 86 adapted for airtight connection to the lower end of a bellows 49, the bellows extending upwardly and connected at its uppermost end to the holding fixture 47 (mentioned above with reference to Figure 4). The bellows 49 is structured in a manner that it will support inner vacuum without collapsing in order that it will tend to contract in the longitudinal direction when vacuum is applied to the inside. As the lever arm 44 is merely supported by the roller 69 rolling on the roller track 101, the lever arm is permitted to be lifted by the contraction of the bellows 49.

The suction disc 81 is designed in a manner generally known within the art with a soft, compliant edge 79 in order that it will easily form airtight contact with the top surface of any substantially planar and horizontally extending object encountered in order that it will suck onto such objects and engage them firmly when vacuum is applied inside the suction disc 81. The suction disc 81 is mounted on a suction disc fitting 83 with air connection for the flexible suction hose 88, whereby vacuum may be applied inside the suction disc 81.

In order to prevent the suction disc from engaging the top surface of the roundtable top plate 90, the suction device 80 may be adjusted so that the suction disc edge 79 will maintain a small clearance to the top surface of the table plate when the lever arm roller 69 is at its lowermost position supported by the upper edge 102 of the peripheral wall. According to a particularly preferred embodiment of the invention, the roundtable top plate 90 is provided flutings, grooves or buttons 91, at least in the region adjacent the suction disc, so as to prevent the forming of airtight contact between the suction disc edge 79 and the top surface of the table plate.

The suction disc fitting 83 also comprises an air conduit connecting its interior with the interior of the holding pipe 84 so that vacuum applied through the flexible suction hose 88 will also be applied to the inside of the bellows 49. According to a particularly preferred embodiment of the invention, the holding pipe 84 is provided with an inner constriction 85 which serves the purpose of controlling the rate of air evacuation from the inside of the bellows.

According to a particular preferred embodiment of the invention, the suction disc 81 further comprises a rigid spike 82 which is pointed downwardly. The purpose of the spike is to pierce or indent the surface of an object engaged by the suction disc so as to prevent sidewards slippage. The spike may be blunt-ended and it may be springloaded in the axial direction, whereby piercing of the objects engaged may be avoided. Although the preferred embodiment comprises one spike within each suction disc 81, other embodiments of the invention could also comprise several spikes, linear edges, curved edges, etc. adapted to fullfill the same purpose.

In its left-hand portion, Figure 6 further illustrates a water jet 36 mounted on the outer post 48 and adapted to eject a fine spray of water over the disc 20 of the roundtable 2.

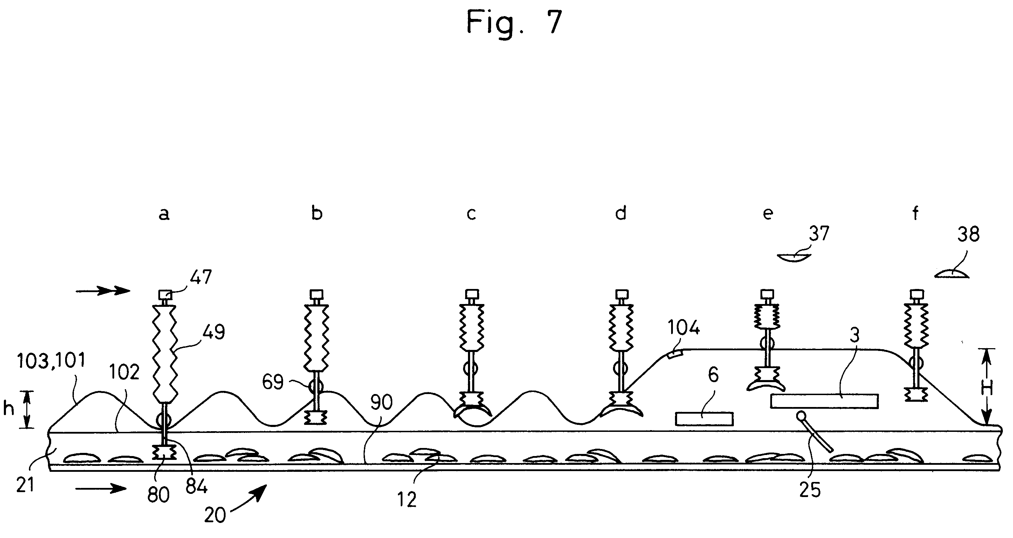

In order to make the operation of the apparatus according to the invention more easily understandable, Figure 7 shows the peripheral wall 21 and the curved rail 103 constituting together the roller track 101 in an unfolded, vertical view, as these components would appear when seen from the position of the shaft 22. In Figure 7, the essentially cylindrical, peripheral wall 21 thus lies in the plane of the drawing, while the radial lever arms (not shown in Figure 7) would extend substantially perpendicularly to the plane of the drawing. Figure 7 also shows suction devices 80, bellows 49 and lever arm rollers 69 associated with six different lever arms at positions denoted a, b, c, d, e and f. The turning motion of the roundtable top plate 90 corresponds to a motion in Figure 7 from left to right, and the turning motion of the lever arms also corresponds to a motion from the left to the right. It is, however, noted that the table and the lever arms may rotate at different velocities.

Figure 7 illustrates how the roller track 101 forming the support of the lever arm rollers 69 comprises portions of the horizontally extending peripheral wall 102 and upwardly and downwardly undulating sections of the curved rail 103, so it can be imagined how turning of the spoke wheel with the lever arms supported by the lever arm rollers 69 rolling on the roller track will impart an upwardly and downwardly surging motion of the lever arms. The curved rail 103 comprises a number of undulations of an altitude denoted with h and a plateau of a somewhat larger altitude denoted by H. The plateau takes the lever arms and the suction devices up, above and past the charge chute 6 and the discharge conveyor 3. In Figure 7, the positions of the first cam 37 and the second cam 38 are also marked symbolically so as to indicate the position where the first cam 37 will shift the valves at the moment when the associated lever arms enter the area above the discharge conveyor, and the position where the second cam 38 will shift back the valves at the moment when the associated lever arms leave the area above the discharge conveyor.

The roller track 101 is also provided with a roller detector 104, e.g. in the form of a mechanical switch or a proximity probe adapted to detect the passage of each of the lever rollers 69 and relay a signal to the control system.

Figure 7 further shows a charge of objects 12 supported on the table plate 90. As the lever arms are rotated, the undulating roller track 101 will by means of the lever arm rollers 69 cause the lever arms to oscillate downwardly to a level where the suction discs are brought very close to the top surface of the table plate, as indicated at a, and upwardly, as illustrated e.g. by the lever arm at b. At the lowermost portion of the track a, the suction disc comes so close to the table plate top surface that it will engage any object present at that position.

When the suction disc engages tightly onto an object, vacuum is developed inside the suction disc and provides a firm grip so that the object may be lifted by the suction disc. As long as no object is present, air is sucked inwardly through the suction disc, but no vacuum is developed inside the suction disc or inside the bellows 49. When an object is engaged tightly, vacuum is developed in the bellows 49, whereby the lever arm will be lifted to an elevated position, e.g. as illustrated by the lever arm c in Figure 7. The constriction 85 inside the holding pipe 84 (cfr. to the explanation given with reference to Figure 6) provides a slight delay in the lifting action of the bellows 49, whereby a suction disc is allowed to suck firmly onto the object before being pulled upwardly. The bellows 49 lifts the lever arm when activated to a level where the roller clears the lower hills of the roller track 101, whereas the higher plateau of the roller track provides a slight, further lifting of the lever arm. The elevation of the lever arm is matched so that the lifted object may pass above the discharge conveyor 3.

When the air valve cam follower 73 (shown in Figures 4 and 6) passes the first cam 37, the air valve is shifted to a position where the suction disc and the bellows are vented to the outside. This shift deactivates the suction disc, causing the object to be released from the suction disc, whereby the object drops down onto the discharge conveyor 3. Since the roller 69 during this stage rolls on the upper plateau of the roller track 101, the lever arm is kept at the high level and the bellows 49 kept in a contracted state until after the suction device has moved past the discharge conveyor when the roller rolls down the downward slope of the roller track. At a position corresponding with the downward slope, the air valve cam follower 73 is shifted back by the action of the second cam 38, applying again air suction to activate the suction disc 81.

Assuming that Figure 7 shows the complete round of the roller track, it is evident that the roller track comprises six valleys and that any suction device 80 may perform up to six approaches to the table plate 90 before entering the area above the discharge conveyor 3. As soon as an object is engaged, the corresponding suction device will be elevated and will carry the object smoothly to the zone above the discharge conveyor. An approach of a suction disc 81 may be unsuccessful if a tight grip cannot be achieved, e.g. if no object is present, an object is only partially within the periphery of the suction disc edge, two objects are overlying each other, bordering within the zone of the suction disc, etc.

Since repeated approach attempts at the same position are hardly likely to improve the chance of a suction disc catching an object, the invention provides the turning of the spoke wheel at a velocity which differs from the velocity of the table plate 90 so that the suction discs will repeat their attempts at everchanging positions in relation to the table. The spoke wheel and the roundtable top plate are preferably turned in the same direction, but at different velocities. The difference between the velocities may be comparatively small, e.g. so that a suction disc after the roller has climbed one hill of the roller track 101 will approach the table at a position which is shifted by a distance comparable to the width of the suction disc. Greater differences are also possible. The only important factor is that the difference between the two velocities is selected so that a randomization of the attack positions is achieved, taking into account the total number and the distribution of the suction devices (i.e. one suction device need not approach a position which has recently been approached by another suction device).

If the chance of success in one attempt e.g. is 40%, it may be estimated that the system according to the invention permitting six attempts at random positions will yield a satisfactory 95% chance of any suction device being loaded with an object at the stage where the object arrives over the discharge conveyor 3. Given that the spoke wheel is rotated at a controlled predetermined velocity, the apparatus according to the invention may discharge the individualized objects at regular time intervals and at high rate.

According to a preferred embodiment, the discharge conveyor is arranged tangentially to the path of the suction discs at the point of release, and the speed of the discharge conveyor is matched to that in the peripheral motion of the suction discs. Hereby the objects dropped onto the conveyor may continue their motion with essentially unchanged speed and with essentially no initial sliding on the conveyor. This eliminates wear on the objects handled.

Although the Figures show sixteen suction discs of equal sizes and arranged at equal distances from the axis of rotation 15, the invention also permits other numbers of suctions discs and other arrangements thereof. The suction discs may e.g. have different sizes, which could be advantageous in case of objects of varying sizes, some objects being so large that only large suction discs can provide sufficient lifting force, whereas other objects may be so small that the chance of a large suction disc being able to get a tight grip might be too small.

According to the invention, the suction discs could also be arranged at varying distances from the axis of rotation so that they together cover a larger area of the table plate.

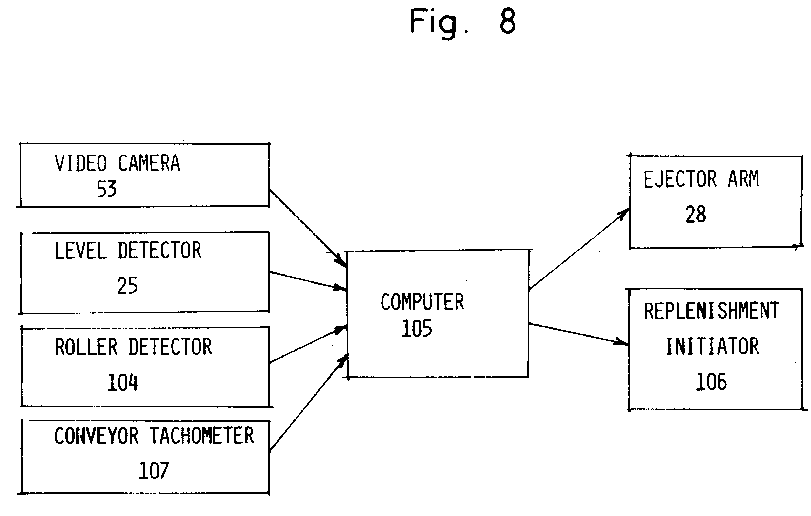

Reference is now made to Figure 8, which shows a block diagramme of a control system employed to run the plant. The control system comprises a computer 105 connected to receive data from the video camera 53, the level detector 25, the roller detector 104 and the conveyor tachometer 107, and to output control signals to the ejector arms 28 and to a replenishment initiator 106. By means of the level detector 25 the computer may monitor the level of objects present on the roundtable and issue calls for replenishment to the replenishment initiator 106 when appropriate. The replenishment initiator 106 may comprise any appropriate means known in the art, e.g. other conveyors, alarm lamps calling for manual action, etc. By means of the video camera 53, the computer is provided with a scanned picture of the objects passing on the discharge conveyor. The computer classifies the scanned objects according to its programming, e.g. according to length or area, selects the appropriate receptacle for the particular object, calculates under utilization of the data from the roller detector and from the conveyor tachometer the exact instant when the particular object is at the position in front of the ejector arm 28 associated with the selected receptacle, and the computer subsequently activates the ejector arm at the right moment.

Utilizing data from the roller detector, the computer may synchronize its operations with the turning motion of the spoke wheel, and the computer may calculate other useful data, e.g. success rate for each of the suction devices, so that it may issue a warning or a service request identifying any particular suction device for which the success rate has dropped below a predetermined limit.

Although, various components and methods are described above in concert, it is obvious that many of the components and methods may also be used in other combinations or contexts and might be separately patentable. Although, specific components and quantities are mentioned, it is obvious that these are only offered as examples, not intended to limit the scope of the invention, and that numerous modifications may be made within the scope of the invention as defined by the appended patent claims.

### List of reference numerals

- 1: Plant
- 2: roundtable
- 3: discharge conveyor
- 4: box conveyor
- 5: charge conveyor
- 6: charge chute
- 7: reception table
- 8: input end of box conveyor
- 9: output end of box conveyor
- 10: receptacle for classified objects
- 11: packing table
- 12: object
- 13: box
- 14: charge elevator
- 15: axis of roundtable
- 20: disc
- 21: peripheral wall
- 22: shaft
- 23: scraper, curved
- 24: deflector blade
- 25: level detector
- 26: roundtable bearing
- 27: inspection zone
- 28: ejector arm
- 29: actuator mechanism
- 30: top structure
- 31: radial struts
- 32: braces (of top structure)
- 33: center structure
- 34: air pump
- 35: main suction pipe
- 36: water jet
- 37: first cam (outward)
- 38: second cam (inward)
- 39: roller for spoke wheel
- 40: spoke wheel
- 41: spoke
- 42: rim of spoke wheel
- 43: annular beam
- 44: lever arm
- 45: spoke wheel drive motor
- 46: girder beam
- 47: holding fixture for bellows
- 48: outer post
- 49: bellows
- 51: frame post
- 52: frame girder
- 53: video camera
- 54: spotlight
- 55: demarcation of field vision
- 61: guide rail for lever
- 62: connecting piece between guide rails
- 63: lever arm sleeve
- 64: lever arm pivot
- 65: lever arm hub
- 66: lever arm attachment
- 67: lever arm rod
- 68: lever arm extension
- 69: lever arm roller
- 70: crosspiece
- 71: air valve
- 72: valve lever
- 73: cam follower
- 74: valve housing
- 75: valve member
- 76: lever arm junction
- 79: suction disc edge
- 80: suction device
- 81: suction disc
- 82: spike
- 83: suction disc fitting
- 84: holding pipe
- 85: constriction
- 86: bellows fitting
- 87: suction hose
- 88: flexible suction hose
- 89: vacuum manifold
- 90: roundtable top plate
- 91: fluting, grooves
- 92: circular profile
- 93: table support roller
- 94: table drive motor
- 95: rotatable air joint
- 101: roller track
- 102: top edge of peripheral wall
- 103: curved rail
- 104: roller detector
- 105: computer
- 106: replenishment initiator
- 107: conveyor tachometer
- 108: conveyor motor

## Claims

1. A method for the individualization and controlled discharge of discrete objects presented in bulk form, comprising
placing a bulk of objects on a supporting surface,
lowering a suction device to a position proximal to said supporting surface to contact any object present at this position,
engaging and gripping by said suction device any object encountered,
elevating said suction device again in case no object is engaged, displacing the suction device in a direction along said supporting surface and lowering it again to a new position proximal to said supporting surface in order to contact any object present at that position, and repeating this sequence, in case no object is engaged,
elevating said suction device upon the engagement of an object, whereby one individualized object is picked out of said bulk, lifting it and keeping it suspended,
displacing said elevated suction device to a position for the release of any suspended object,
releasing said object by appropriate control of said suction device, and
collecting and discharging said object.

2. A method for determining physical data of discrete objects presented in bulk form, comprising the method for the individualization and controlled discharge according to Claim 1 and the step of collecting the objects discharged and conveying the objects individually to means for determining the physical data of the objects.

3. A method for the classification of discrete objects according to physical data, which objects are received in bulk form, comprising the method for determining physical data according to Claim 2 and the step of conveying the objects to a line of receptacles, each object being conveyed to a receptacle selected according to the particular physical data determined for the particular object.

4. An apparatus for the individualization and controlled discharge of discrete objects presented in bulk form, comprising
a supporting surface adapted to support objects in bulk form,
means for collecting and discharging individualized objects,
a suction device adapted to engage and grip any object contacted,
means for controlling said suction device so that any object engaged may be released when appropriate,
means for manipulating said suction device so that it may be lowered to a position proximal to said supporting surface and elevated to an elevated position, and so that it may be displaced in a direction along said supporting surface to various positions in relation to said supporting surface and in relation to said means for collecting and discharging individualized objects,
said positions including a release position, from which an object engaged by said suction device may be released by appropriate control of said suction device to be collected by said means for collecting and discharging individualized objects,
said means for manipulating said suction device being adapted so that said suction device, in case it is lowered to a position proximal to said supporting surface without engaging any object, is elevated again, displaced and lowered again at a different position also proximal to said supporting surface, and so that said suction device upon engaging an object is elevated, maintained in its elevated position and moved to the release position, where the object may be released to be collected and discharged by said means for collecting and discharging individualized objects.

5. An apparatus according to Claim 4, **characterized** by being adapted to move said suction device periodically into the release position and away from the release position again.

6. An apparatus according to Claim 4 or Claim 5, **characterized** by being adapted so that said suction device during an interval of time when it is not in the release position may be lowered several times at different positions in relation to said supporting surface, until an object is engaged.

7. An apparatus according to Claim 4, 5 or 6, **characterized** by said supporting surface being provided with flutings, grooves or buttons in the top surface to prevent said suction device from forming an airtight connection with said supporting surface.

8. An apparatus according to any of the Claims 4-7, **characterized** by said means for manipulating said suction device comprising lifting means adapted to monitor the air pressure inside said suction device and to respond to an underpressure inside said suction device by elevating said suction device.

9. An apparatus according to Claim 8, **characterized** by said lifting means comprising a bellows adapted to lift said suction device when vacuum is applied and an air conduit connecting said bellows with said suction device so that any vacuum developed in said suction device upon the engagement of an object will also be communicated to said bellows.

10. An apparatus according to Claim 9, **characterized** by said conduit comprising a constriction adapted to delay the evacuation of the volume inside said bellows.

11. An apparatus according to any of the Claims 4-10, **characterized** by said suction device comprising a flexible suction disc with a soft edge adapted so that it may form an airtight contact with an object having an essentially planar surface and pointed means within the outline of said suction disc and protruding axially so as to indent or pierce said planar surface in order to prevent sidewards slippage of said object in relation to said suction disc.

12. An apparatus according to any of the Claims 4-11, **characterized** by said supporting surface being constituted by a roundtable rotating about an essentially vertical axis and by said suction device being mounted on a fixture which is rotatable about the same axis, but at a velocity of rotation which is independent of the velocity of rotation of said roundtable.

13. An apparatus according to any of the Claims 4-12, **characterized** by said means for collecting and discharging individualized objects comprising a conveyor oriented tangentially to the path of rotation of said suction device.

14. An apparatus according to any of the Claims 4-13, **characterized** by comprising means for spraying water over said supporting surface.

15. A device for engaging and lifting an object, comprising
a suction device,
a bellows adapted to lift said suction device, when vacuum is applied, and
an air conduit connecting said bellows to said suction device in order that any vacuum developed within said suction device upon the engagement of an object will be communicated to said bellows.

16. The use of the apparatus according to any of the Claims 4-14 to individualize comestible objects, such as pieces of fish, fillets of fish, or fillets of frozen fish.
